# EUROPÄISCHE PATENTSCHRIFT

(11) **EP 1 090 270 B1**
(45) Veröffentlichungstag und Bekanntmachung des Hinweises auf die Patenterteilung: **14.08.2002**
(21) Anmeldenummer: 97951833.9
(22) Anmeldetag: 08.12.1997
(51) Int. Cl.: G01C 9/18

(54) **FLÜSSIGKEITS-ELEKTRODENSYSTEM FÜR RESISTIVE NEIGUNGSSENSOREN**
FLUID ELECTRODE SYSTEM FOR RESISTIVE SLOPE SENSORS
SYSTEME D'ELECTRODES A FLUIDE POUR CAPTEURS DE PENTE RESISTANTS

(30) Priorität: 09.12.1996 DE 19650977
(43) Veröffentlichungstag der Anmeldung: 11.04.2001
(73) Patentinhaber: ECT GmbH - Entwicklungsgesellschaft für chemische Technik, 66265 Heusweiler (DE)
(72) Erfinder: Altmeier, Patrick, 66822 Lebach (DE); Konrad, Andreas, 66440 Blieskastel-Mimbach (DE)
(86) Internationale Anmeldenummer: DE9702856
(87) Internationale Veröffentlichungsnummer: WO9826250

(56) Entgegenhaltungen:
- WO-A-96/27892
- US-A- 2 927 987

## Beschreibung

### 1. Problemstellung/ Stand der Technik

Ein resistiver Neigungssensor, vor allem für den Automobilbereich, ist in DE 19512374 beschrieben. Dort ist ein Gehäuse teilweise mit einer elektrisch leitfähigen Flüssigkeit ausgefüllt. Das Gehäuse enthält weiterhin Elektroden zur Aufnahme von Meßsignalen, die durch die Gehäusewand nach außen geführt sind, um Meßsignale einer Auswerteeinheit zuzuführen. In dieser Erfindung wird als Flüssigkeit zur Erzeugung der Funktionalität des Sensors ein Polyether vorgeschlagen. Diese vorgeschlagenen Stoffe sind jedoch toxisch, so daß sich eine Massenanwendung mit Problemen behaftet sein kann.

In FR-A-2668824 sind flüssigkeitsgefüllte Sensoren beschrieben, die als Sensorfluid Mischungen auf Basis von Ethylenglykol und Wasser zu gleichen Teilen enthalten. Der untere Arbeitsendpunkt für diese Sensoren wird mit -31 °C angegeben. Da im Automobilbereich ein Arbeitstemperaturbereich von <-40 bis 120 °C sowie ein Flammpunkt > 110 °C gefordert wird, scheidet diese Lösung ebenfalls aus.

Weiterhin sind in WO 96/27892 und DE 19507610 Flüssigkeiten beschrieben, die mindestens Triethylenglykodimethylether als Hauptkomponente, eine ein- oder mehrfach OH-funktionelle Verbindung und ein in der Mischung dissoziiertes Salz enthalten. Weitere als Elektrolyte geeignete Mischungen sind in in US 2852646, US 2387313 und in US 2927987 beschrieben.

Die in DE 19597610 beschriebene Lösung stellt als Sensorfluid, aufgrund der Randbedingungen für die Anwendung, für den in DE 19512374 beschriebenen Sensor jedoch die beste Lösung dar.

Nachteile der dort beschriebenen Lösung sind jedoch eine mögliche Gesundheitsgefährdung durch Triethylenglykoldimethylether (siehe dazu: RTECS No: XF0665000 2,5,8,11-Tetraoxadodecane), eine mögliche Peroxidbildung in Kontakt mit Sauerstoff und eine schwierige Handhabbarkeit der Flüssigkeiten aufgrund ihrers stark hygroskopischen Verhaltens in Kombination mit unerwünschten Änderungen der elektrischen Eigenschaften bei Wasseraufnahme.

### 2. Aufgabe der Erfindung

Aufgabe der Erfindung ist es, ein Sensorfluid-Elektrodensystem zu finden, das die Randbedingungen für den Einsatz in einem Neigungssensor, wie oben beschrieben, erfüllt, und gleichzeitig keine Probleme wie Toxizität, Wasserunverträglichkeit und Peroxidbildung aufweist.

Das Elektroden-Fluid-System muß weiterhin folgende technische Randbedingungen lösen:
- Arbeitstemperaturbereich -40 bis +85°C
- Leitfähigkeitsverhältnis an den Arbeitstemperatureckpunkten "Faktor F" max. 22 Berechnung: (Leitfähigkeit +85°C / Leitfähigkeit -40°C)
- möglichst geringe Änderung der Viskosität und des Leitfähigkeitsniveaus durch thermische Alterung
- möglichst geringe Änderung der Viskosität und des Leitfähigkeitsniveaus durch elektrische Alterung
- keine Abscheidungen an den Elektroden

### 3. Lösung

Die erfindungsgemäße Aufgabe zum Finden der Fluidkomponente wird grundsätzlich durch Mischen eines Elektrolyten in einem Solvens gelöst. Zusätzlich können noch weitere Komponenten wie Lösevermittler, Stabilisatoren usw. eingeführt werden. In einem dritten Schritt kann das Sensorfluid dem gewählten Elektrodensystem angepasst werden.

Wie in WO 96/27892 beschrieben, stellt die Wahl von Propylencarbonat als Solvens einer Fluidkomponente zunächst keine Lösung der Erfindungsaufgabe dar, da Elektrolyten auf der Basis von Propylencarbonat eine vergleichsweise große Änderung der Leitfähigkeit mit der Temperatur (vgl. Bsp. 1) zeigen. Andere, dort aufgeführte Fluidkomponenten bedingen geringere Leitfähigkeitsänderungen mit der Temperatur.

Bei der Zugabe von Wasser zu den Sensorflüssigkeiten kommt es jedoch bei den Sensorflüssigkeiten auf Basis von Triethylenglykoldimethylether zu einer dramatischen Verschlechterung des Leitfähigkeitsverhältnisses. Dies führt bei der Anwendung dazu, daß bei Fertigung und über die komplette Lebensdauer des Neigungssensors wasserfrei gearbeitet werden muß. Dies stellt hohe Anforderungen an den Fertigungsaufwand und an die Abdichtung des Gehäuses, vor allem da, wie in DE 19512374 beschrieben, Elektroden durch das Gehäuse geführt werden müssen, und die Durchführung abzudichten ist. Diese ungünstigen Eigenschaften des Fluidsysstems werden durch den hygroskopischen Charakter des Triethylenglykoldimethylether verstärkt.

Wie in Bsp.1 gezeigt, ist die Änderung des Leitfähigkeitsverhältnisses zwischen den Ecktemperaturen im Falle von Propylencarbonat als Sensorfluidbasis bei der Zugabe von Wasser nur gering.

Dies ist erstaunlich, da die Zugabe von Wasser bei sonstigen organischen Lösemitteln immer zu erheblichen Änderungen dieses Verhältnisses führt. Propylencarbonat scheint zur Verfügung stehende Ladungsträger (lonen) bei hohen Temperaturen für Wasser zu maskieren.

Aus diesem Grunde ergibt sich durch die erfindungsgemäße Verwendung von Propylencarbonat als Solvensbasis der Fluidkomponente der Vorteil, daß die elektrochemischen Eigenschaften, insbesondere das Leitfähigkeits-Ecktemperaturverhältnis, sehr unempfindlich gegenüber Verunreinigungen mit Wasser sind.

Es wurde gefunden, daß eine Mischung von Tetraalkylammoniumhalogeniden und Propylencarbonat die erfindungsgemäße Aufgabe scheinbar löst. Die Stoffe sind im Temperaturbereich von -45 bis > +100 °C in Propylencarbonat löslich. Diese Lösungen weisen elektrische Leitfähigkeit auf. Z.B. besitzt eine 0,055 % Lösung bei -40 °C eine Leitfähigkeit von 12,5 µS cm⁻¹, bei 85 °C eine Leitfähigkeit von 260 µS cm⁻¹. Durch die Variation der eingesetzten Menge Tetraethylammoniumhalogeniden läßt sich die Leitfähigkeit, ohne starke Veränderung von F, in weitem Rahmen den Erfordernissen anpassen.

Um die erfindungsgemäße Aufgabe vollständig zu lösen, ist ein Sensorfluid zu finden, das u.a. gegen thermische Belastung unempfindlich ist. Wie Bsp. 5 zeigt, ist dies im Falle der Tetraalkylammoniumhalogeniden als Elektrolyt nicht gegeben.

Die Lösung der erfindungsgemäßen Aufgabe erfolgt durch Wahl von Natriumiodid als Elektrolyt.

Dieser Elektrolyt ist zunächst nicht in Betracht zu ziehen, da Elektrolyte mit Metallkationen die ungünstige Eigenschaft besitzen, mit möglichen Zersetzungsprodukten des Solvens (Kohlendioxid) zu Niederschlägen zu reagieren. Die genannten Nachteile können jedoch überraschend durch Begrenzung der Einsatzbedingungen und gegebenenfalls durch Zusatz von Stabilistatoren behoben werden.

Niederschläge treten z.B. bei thermischer Belastung über 90 °C über einen längeren Zeitraum auf, wenn der Mischung mehr als 1,5% Wasser zugefügt ist (vgl. Bsp 4). Die Beispiele verdeutlichen diese Zusammenhänge. Desweiteren läßt sich durch Zusatz von Dibenzo-18-krone-6 ein Ausfallen von Natriumcarbonat vermeiden.

Für den technischen Einsatz des beschriebenen Elektrolyten ist die Langzeitstabilität des Elektrolyten ein entscheidendes Kriterium. Der Elektrolyt darf seine Eigenschaften bei Transport, Lagerung, Verarbeitung und Einsatz nur in geringen Umfang ändern.

Eine erfindungsgemäße Mischung von Propylencarbonat mit Natriumjodid ändert sich ohne äußere Einwirkungen bezüglich Leiffähigkeit, Faktor F, Viskosität, Siedepunkt und Flammpunkt nicht. Die verwendeten Stoffe sind thermodynamisch unter den gegebenen Randbedingungen (übliche Lager- und Verarbeitungstemperatur max. 25 °C) stabil.

Bei der Verwendung der Flüssigkeit als Fluidkomponente in resistiven Neigungssensoren im Automobilbereich ist die Flüssigkeit sowohl thermisch (bis 8 5 °C) als auch elektrochemisch belastet.

Eine weitere Belastung im Anwendungsfall ist das Eindiffundieren von Substanzen wie Wasser und Sauerstoff durch nicht vollständig dichte Gehäuse und dadurch mögliche chemische Reaktionen entweder direkt mit dem Elektrolyt oder dem System Elektrolyt/Elektrode.

In Beispeil 5 ist die thermische Belastbarkeit verschiedener Elektrolyte miteinander verglichen.

Wie aus 5.3. hervorgeht ändert sich die Leitfähigkeit bei Raumtemperatur nicht (Meßgenauigkeit : +/-0,5 µScm⁻¹). Somit ist eine Lagerstabilität gewährleistet.

Bei 85/90 °C über 1500 h geht die Leitfähigkeit der Tetraethylammoniumchlorid/Propylencarbonat Mischung um 28 % zurück, während die Leitfähigkeit des Nal haltigen Elektrolyten nur um 2 bis 3 % abnimmt.

Wie aus Beispiel 5.5.-5.9 hervorgeht, ist auch bei 120 °C die thermische Stabilität des Nal haltigen Elektrolyten gegeben. Zusätze zum Elektrolyten (vgl. elektrochemische Stabilität, Niederschläge) haben keinen quantifizierbaren Einfluß.

Aufgrund von Gehäuseundichtigkeiten läßt sich im Anwendungsfall der Kontakt des Elektrolyten mit Wasser nicht ausschließen. Wasser reagiert mit Propylencarbonat zu 1,2 Propandiol und Kohlendioxid. Metallcarbonate weisen in Propylencarbonat nur sehr geringe Löslichkeit auf. Wie in Besipiel 4 gezeigt, existieren Bedingungen, unter denen es im Elektrolyt zu Niederschlagsbildung kommen kann.

Bei der Verwendung von TEtACI (4.1.) konnte unter verschiedensten Bedingungen keine Niederschlagsbildung festgestellt werden, problematisch bleibt dabei aber die unzureichende thermische Stabilität.

Beispiel 4.1-4.5 zeigt, daß bei Verwendung von Nal eine bestimmte Wasserkonzentration im Elektrolyten nicht überschritten werden sollte. Ein Ausfallen von Natriumcarbonat kann aber in Anwendungsfällen, bei denen eine Wasseraufnahme des Elektrolyten nicht ausgeschlossen werden kann, vorteilhafterweise durch die Zugabe von Dibenzo-18-krone-6 verhindert werden.

Die erfindungsgemäße Fluidkomponente dient dazu Wechselstrom zwischen einem Elektrodensystem zu leiten. Um ein neigungsabhängiges langzeitstabiles Signal zu erhalten, ist es notwendig, die Fluidkomponente mit einem langzeitstabilen Elektrodensystem zu kombinieren.

Das Sensorfluid-Elektrodensystem basiert auf dem Prinzip, daß ein Widerstand zwischen zwei Elektroden gemessen wird, die in eine Flüssigkeit nur teilweise eintauchen.

Es ergibt sich somit ein der Fläche des eingetauchten Elektrodenteils entsprechendes Widerstandssignal, so daß aufgrund dieses Signals auf die Lage der Elektrode geschlossen werden kann.

Die Widerstandsmessung erfolgt dadurch, daß ein Strom durch das Sensorfluid-Elektrodensystem geleitet wird. Somit wird das System dauerhaft mit Strom belastet.

Daraus resultiert als Basisanforderung, daß das im Sensorfluid befindliche Elektrodensegment durch Stromfluß nicht verändert werden darf. Ebenso darf sich im Fluid keine Polarisationsschicht mit der Zeit aufbauen, da sonst ein variables Signal bei gleicher Neigungslage gemessen wird.

Zur Lösung dieses Problems sind sowohl Elektroden zu finden, die diese Anforderungen erfüllen, als auch die zur Messung erforderlichen Strom- und Spannungsniveaus so anzupassen, daß ein langzeitstabiles System entsteht. Eine naheliegende Lösung des Problems ist, unpolarisierbare Elektroden, z.B. Silber/Silberiodid bzw. Silber/Silberchlorid-Elektroden, auszuwählen. Da jedoch Gleichstromanteile in jeder Meßapparatur nicht auszuschließen sind, entsteht bei derartigen Elektroden die Gefahr, daß ständig im Sensorfluid befindliche Elektrodenteile sich verändern, da z.B. Silberhalogenid vollständig reduziert wird.

Überraschend wurde gefunden, daß mit polarisierbaren Elektroden ein langzeitstabiles System aufgebaut werden kann. Als besonders geeignete Elektrodenmaterialien hat sich hierbei Platin erwiesen. Ebenso können Platin/Iridium oder Ruthenium-Mischoxide verwendet werden. Als besonders Vorteilhaft hat sich dabei erwiesen, diese Elektrodenmaterialien auf einen Ventilmetallträger, vorzugsweise einen Titandraht aufzubringen, da dabei vorteilhafterweise die mechanische Stabilität des Ventilmetalls mit den elektrochemischen Eigenschaften der Edelmetallauflage verknüpft werden.

Auch das Fluidsystem muß dem gewählten Elektrodensystem angepasst werden. Es ergeben sich verschiedene technische Schwierigkeiten, die durch das verwendete Fluidsystem gelöst werden müssen: durch Gleichstromanteile kann sich in Kathodennähe eine basische Grenzschicht und in Anodennähe eine saure Grenzschicht bilden. Dies kann in Anwesenheit von Wasser zu einer Zersetzung von Propylencarbonat und anschließend - bei Verwendung von Natriumiodid als Elektrolyt - zum Ausfallen von Natriumcarbonat führen. Ebenso kann bei Verwendung von Tetraethylammoniumchlorid das Tetraethylammoniumion in Anodennähe zersetzt werden. Desweiteren kann es bei zu hohen Meßströmen allgemein zur kathodischen und anodischen Zersetzung des Fluids kommen. Es zeigt sich, daß die Verwendung von Ammoniumsalzen in keinem Fall zu einem langzeitstabilen System führt. Es zeigt sich, daß die Aufgabe der Erfindung nur durch Anpassen des Systems Propylencarbonat-Natriumiodid gelöst werden kann:

Die Gefahr eines sauren oder basischen Milieus in Elektrodennähe kann durch die verwendeten Ströme und Spannungen unterdrückt werden. Durch Verwendung eines Maskierungsmittels, z.B. Dibenzo-18-krone-6 kann ein Ausfallen von Natriumcarbonat in Kathodennähe unterbunden werden. Probleme bezüglich Zersetzung durch zu hohe Ladungsmengen pro Phase können durch Zusatz redoxaktiver Stoffe, z.B. BHT (2,6-Di-tert-butyl-4-methylphenol) erfindungsgemäß vermieden werden.

Damit können mit der erfindungsgemäßen Kombination von mindestens Natriumiodid und Propylencarbonat in Kontakt mit den beschriebenen Elektroden alle Randbedingungen der Aufgabe überraschend gelöst werden. Die Eigenschaften eines Neigungssensors bezüglich des Faktors F können dann auch über lange Gebrauchszeiträume konstant bleiben.

Dies ist vor allem für technische Anwendungen wichtig, bei denen Wasser beim Befüllen von Bauteilen oder durch Leckagen von Dichtungsmaterialien während der Gebrauchsdauer nicht ausgeschlossen kann.

Weiterhin weist die erfindungsgemäß beanspruchte Flüssigkeit eine Reihe von Vorteilen auf, die sie für die Anwendung in elektrischen und elektronischen Bauteilen besonders geeignet erscheinen lassen:der Flammpunkt oben aufgeführter Mischung liegt sehr hoch (123 °C), der Siedepunkt bei 241-242 °C. Durch den tiefen Schmelzpunkt (-48°C) ergibt sich somit ein breiter Temperaturbereich für Anwendungen. Auch liegt die Zündtemperatur oben aufgeführter Mischung mit 510 °C sehr hoch.

Wichtiger Vorteil der Substanz ist auch die ökologische und humantoxische relative Unbedenklichkeit, die Flüssigkeit ist WGK0 und weder giftig noch mindergiftig.

Die beschriebenen Elektrolyte zeichnen sich durch gleichbleibende Leitfähigkeiten bei hohen Temperaturen über lange Zeiträume aus. Weiterhin ist bei mit Wechselstrom betriebenen resistiv arbeitenden Sensoren eine gewisse Toleranz gegen Gleichstromanteile der Verschaltung erforderlich, die bei den erfindungsmäßen Elektrolyten vorteilhafterweise gegeben ist.

Ein weiterer Vorteil ist der geringe Dampfdruck, was bei abgedichteten Hohlkörpern (Sensoren) zu geringen Leckraten über die Gebrauchdauer führt.

### 4. Anwendung

Beschriebene Flüssigkeit läßt sich z.B. in Sensoren zur Messung der Neigung, wie sie z.B. bei Diebstahlwarnanlagen im KFZ-Bereich eingesetzt werden, verwenden.

### 5. Beispiele

Ohne Beschränkung der Allgemeinheit der Erfindung wird in den folgenden Beispielen eine erfindungsgemäße Sensorflüssigkeit mit einer eingestellten Grundleitfähigkeit von 17,5 µS cm⁻¹ bei -40 °C verwendet.

Der Faktor F wird als Quotient der Leitfähigkeiten der Elektrolytlösungen bei -40°C sowie bei 85°C definiert. Die Leitfähigkeit wird mittels eines handelsüblichen Leitfähigkeitsmeßgerät mit Doppelplatinelektrode (Hersteller WTW, Elektrode Schott) bestimmt.
1)
a) Hergestellt wird eine Mischung aus 90 % Triethylenglykoldimethylether, 9 % Ethylenglykol und 1% Tetraethylammoniumchlorid (TEACI).
b) Hergestellt wird eine 0,05 % Lösung von TEACI in Propylencarbonat.
c) Hergestellt wird eine Lösung von 0,05% Nal in Propylencarbonat.

2) zu den unter 1) a)-c) hergestellten Lösungen wird jeweils 1% Wasser zugegeben. Man erhält so die Lösungen 2) a)-c).
3) Der Faktor F der unter 1) und 2) hergestellten Lösungen wird bestimmt:

| Mischung | Faktor F | Faktor F |
|---|---|---|
| | Mischungen Beispiel 1 | Mischungen Beispiel 2 |
| a) | 16 | 31 |
| b) | 21 | 22 |
| c) | 21 | 22 |

4) Auslagerungsversuche:

| Nr | Wassergehalt % | Leitsalz/Mischung | T/°C | t/h | Niederschlag |
|---|---|---|---|---|---|
| 4.1 | 1,9 | TEtACl | 90/85 | 500+1000 | nein |
| 4.2 | 2,02 | Nal | 90 | 48 | ja |
| 4.3 | 0,25 | Nal | 90/85 | 500+1000 | nein |
| 4.4 | 0,5 | Nal | 90/85 | 500+1000 | nein |
| 4.5 | 0,48 | Nal | 115 | 10 | nein |
| | | | 40 | 288 | nein |
| | | | -18 | 72 | ja |
| | | | 20 | 24 | ja |

5. Auslagerungsversuche:

| Nr | Leitsalz Mischung | LF(25°C) / µScm⁻¹ | | ΔLF | ΔLF | T/°C | t/h |
|---|---|---|---|---|---|---|---|
| | | Anfang | Ende | % | | | |
| 5.1 | Nal | 162 | 156 | -6 | -3,7 | 90/85 | 504+1080 |
| 5.2 | Nal | 166 | 162 | -4 | -2,4 | 90/85 | 456+1080 |
| 5.3 | Nal | 164,5 | 164,3 | -0,2 | -0,1 | 20 | 4700 |
| 5.4 | TEACI | 183 | 143 | -40 | -27,9 | 90/85 | 504+1080 |
| 5.5 | Nal | 157 | 153,1 | -3,9 | -2,5 | 120 | 312 |
| 5.6 | Nal | 182,6 | 181 | -1,6 | -1,1 | 120 | 312 |
| 5.7 | Nal+1+2 | 163,8 | 161,9 | -1,9 | -1,2 | 120 | 312 |
| 5.8 | Nal | 165 | 163,2 | -1,8 | -1,1 | 120 | 312 |
| 5.9 | Nal+2 | 167 | 163,4 | -3,6 | -2,1 | 120 | 312 |

| | | | | | | | |
|---|---|---|---|---|---|---|---|
| Zusätze 1: Dibenzo-18-krone-6 | | | | | | | |
| 2: BHT | | | | | | | |

## Patentansprüche

1. Elektroden-Elektrolytsystem zur Messung von Neigungen bestehend aus einem Elektrodensystem in einem Gehäuse. das teilweise mit elektrisch leitfähiger Flüssigkeit ausgefüllt ist, so daß die durch die neigungsabhängige Relativlage der Flüssigkeitsoberfläche zur Elektrodenanordnung bedingte Änderung des zwischen den Elektroden ausgebildeten elektrischen Strömungsfeldes über eine Meßeinrichtung erfaßt wird, aus deren Ausgangssignal die Neigung ermittelbar ist, **dadurch gekennzeichnet, daß** die elektrisch leitfähige Flüssigkeit aus einer Lösung von mindestens Nal in Propylencarbonat besteht.

2. Elektroden-Elektrolytsystem nach Anspruch 1, **dadurch gekennzeichnet, daß** polarisierbare Elektroden aus Platin oder platinierten Ventilmetallen oder aus Palladium oder palladinierten Ventilmetallen verwendet werden.

3. Elektroden-Elektrolytsystem nach Anspruch 1, **dadurch gekennzeichnet, daß** die reversible Elektroden aus Silber oder Silber/Silberhalogenid verwendet werden.

4. Elektroden-Elektrolytsystem nach Anspruch 1, **dadurch gekennzeichnet, daß** die verwendeten Elektroden mit Platin/ Iridium-Mischoxiden oder Ruthenium-Mischoxiden beschichtet sind.

5. Elektroden-Elektrolyt nach Anspruch 1, **dadurch gekennzeichnet, daß** dem Elektrolyt Stabilisatoren wie Dibenzo-18-krone-6 oder BHT zugefügt sind.

## Claims

1. An Electrode-electrolyte system for measuring slopes comprising an electrode system within a housing which is partially filled out with conductible fluid, wherein a change in the slope is measured by means of a measuring unit, the slope being dependent on the relative level of the fluid surface and which is conditioned on the arrangement of the electrodes in the electrical current field, measured by a starting signal from the measuring unit **characterized in that** the electrically conductible fluid is a solution of at least NaI in propylene-carbonate.

2. Electrode-electrolyte system according to claim 1, **characterized in that** the electrodes are polarized electrodes and are from platinum or platinum plated valve metal, or from palladium, or palladium plated valve metal.

3. Electrode-electrolyte system according to claim 1, **characterized in that** the electrodes are from silver, or silver/silverhalogenide.

4. Electrode-electrolyte system according to claim 1, **characterized in that** the electrodes are coated with platinum/iridium-mixed-oxides or ruthenium-mixed oxides.

5. Electrode-electrolyte system according to claim 1, **characterized in that** stabilizers such as dibenzo-18-krone-6 or BHT, are added to the electrolyte.

## Revendications

1. Un système d'électrodes/ électrolyte pour la mesure des inclinaisons et qui consiste en un système d'électrodes installé dans un carter qui est partiellement rempli avec un liquide conductible à l'électricité ainsi que, provoqué par une position relative de la surface du liquide dépendant de l'inclinaison au groupement des électrodes, le champ des courants électriques est enregistré par un équipement de mesure dont le signal résultant vérifie l'angle de l'inclinaison, **caractérisé par le fait que** le liquide conductible à l'électricité se compose au moins de iodure de sodium en 4-méthyl-1,3-dioxolane-2-one.

2. La revendication 1) du système d'électrodes/ électrolyte **caractérisé par le fait qu'**on applique des électrodes polarisables en platine ou en métaux-ventilés platinés ou en palladium ou en métaux-ventilés palladinés.

3. La revendication 1) du système d'électrodes/ électrolyte **caractérisé par le fait qu'**on applique des électrodes reversibles en argent ou en argent/ halogénide d'argent.

4. La revendication 1) du système d'électrodes/ électrolyte **caractérisé par le fait qu'**on applique des électrodes en platine/ d'oxydes mixtes d'iridium ou en ruthénium/ d'oxydes mixtes de ruthénium.

5. La revendication 1) du système d'électrodes/ électrolyte **caractérisé par le fait qu'**on ajoute à l'électrolyte des stabilisateurs comme 1,4,7,10,13,16-hexaoxacyclooctadecane ou 2,6-di-tert.-butyl-4-méthylphénol.
